# EUROPÄISCHE PATENTANMELDUNG

(11) **EP 4 716 041 A1**
(43) Veröffentlichungstag der Anmeldung: **25.03.2026**
(21) Anmeldenummer: 25184763.8
(22) Anmeldetag: 24.06.2025
(51) Int. Cl.: H02B 1/30, H02B 1/40, H02B 1/24, H02B 1/20, H02B 1/46, H02B 1/42, H02B 1/44

(54) **SCHALTKASTENSYSTEM**

(30) Priorität: 19.09.2024 DE 102024209015
(71) Anmelder: Viessmann Holding International GmbH, 35108 Allendorf (Eder) (DE)
(72) Erfinder: UNGEMACH, Dirk, 35108 Allendorf (DE)
(74) Vertreter: FDST Patentanwälte

(57) **Zusammenfassung**

Die Erfindung betrifft ein Schaltkastensystem (14) mit einem Hauptmodul (12), das einen Schaltkasten (16) umfasst, in dem eine Funktionskomponente (18) für eine Wärmepumpe (20) oder ein Batteriespeichersystem (38) angeordnet ist. Der Schaltkasten (16) weist eine erste mechanische Schnittstelle (24) zum Anschluss einer zweiten mechanische Schnittstelle (26) eines Schaltkastens (16) eines Untermoduls (28) auf, in welchem eine weitere Funktionskomponente (32) angeordnet ist. Die Erfindung betrifft ferner die Verwendung eines Schaltkastensystems (14).

## Beschreibung

Die Erfindung betrifft ein Schaltkastensystem mit einem Hauptmodul, das einen Schaltkasten umfasst. Ferner betrifft die Erfindung die Verwendung eines Schaltkastensystems.

Gebäude weisen üblicherweise eine Gebäudeinstallation auf, mittels derer eine elektrische Energie bereitgestellt wird. Die Gebäudeinstallation weist hierbei üblicherweise eine Hauptleitung auf, die an ein Versorgungsnetz angeschlossen ist, mittels dessen eine dreiphasige Wechselspannung geführt wird. Die Hauptleitung ist in einen zentralen Verteilerschaltschrank des Gebäudes geführt, wo eine Verteilung auf unterschiedliche (Strom-)Kreise erfolgt, wobei jedem der Stromkreise jeweils eine der Phasen des Versorgungsnetzes zugeordnet ist. Somit ist es erforderlich, dass die Stromkreise mittels einer jeweiligen elektrischen Leitung mit dem Verteilerschaltschrank verbunden sind. Die Stromkreise sind meist mittels eines zugeordneten Sicherungsautomaten oder dergleichen separat elektrisch abgesichert. Somit Ist bei einem Fehlfunktion eines der Stromkreise ein ungestörter Weiterbetrieb der anderen Stromkreise ermöglicht.

Zur Heizung von Gebäuden werden in zunehmendem Maße Wärmepumpen herangezogen. Diese weisen einen Kältemittelkreislauf mit einem Kompressor auf. Der Kompressor wiederum ist mittels eines Elektromotors angetrieben. Zur Verringerung eines Verschleißes sowie zur Erhöhung eines Wirkungsgrades ist der Elektromotor dabei meist bürstenlos ausgestaltet. Meist weist die Wärmepumpe eine Nenn-Wärmeleistung zwischen 2,6 kW und 15 kW oder von bis zu 60 kW auf. Die elektrische Nenn-Leistung des Elektromotors ist daher üblicherweise zwischen 1kW und 20 kW. Infolgedessen und zum Teil aufgrund bestehender gesetzlicher Vorgaben ist daher bei der Gebäudeinstallation eine separate elektrische Absicherung der Wärmepumpe erforderlich. Aufgrund der vergleichsweise hohen elektrischen Leistung sind dabei der Wärmepumpe meist alle drei Phasen zugeordnet.

Ferner werden in Gebäuden vermehrt mehrere Photovoltaikmodule montiert, die zum Beispiel auf einem Gebäudedach angeordnet sind. Mittels der Photovoltaikmodule wird eine elektrische Gleichspannung bereitgestellt, die auch für den Betrieb der elektrischen Geräte des Gebäudes verwendet werden kann, wofür ein Wechselrichter verwendet wird. Meist ist zudem ein Batteriespeichersystem mit einem elektrischen Speicher in Form eines batterieelektrischen Speichers vorhanden, mittels dessen überschüssige Energie gespeichert werden kann. Ferner ist es möglich, überschüssige elektrische Energie in das Versorgungsnetz einzuspeisen.

Soll ein Elektrofahrzeug mittels der Gebäudeinstallation geladen werden, wird meist eine Wallbox verwendet. Damit hierbei eine Ladedauer vergleichsweise kurz ist, werden üblicherweise ebenfalls sämtliche drei Phasen verwendet. Aufgrund der vergleichsweisen hohen elektrischen Leistung ist ebenfalls eine separate Absicherung der Wallbox erforderlich.

Sofern somit bei einem Gebäude sowohl eine Wärmepumpe als auch ein Batteriespeichersystem und eine Wallbox vorhanden sind, ist eine dreimalige separate Absicherung erforderlich. Wenn nun eine bereits bestehende Gebäudeinstallation entsprechend angepasst werden soll, ist es möglich, dass in dem Verteilerkasten nicht ausreichend Platz zur Montage der Absicherung der Wärmepumpe, der Montage der Absicherung des Batteriespeichersystems, der Montage des Stromzählers und der Montage der Absicherung der Wallbox zur Verfügung steht. Auch ist es erforderlich, sämtliche hierfür verwendeten elektrischen Leitungen zu dem zentralen Verteilerschaltschrank zu ziehen, was zu größeren baulichen Maßnahmen führen kann.

Eine Alternative sieht daher vor, diese drei Komponenten, also der Absicherung der Wärmepumpe, des Batteriespeichersystems und der Wallbox, einen gemeinsamen Schaltkasten zuzuordnen. Dieser wird dann mit dem zentralen Verteilerschrank elektrisch verbunden. In diesem ist dann ausreichend Platz zur Absicherung der drei Komponenten. Falls dabei ein generischer Schaltkasten verwendet wird, ist es erforderlich, in diesem die Verschaltung nach Montage manuell durchzuführen, wofür eine Vielzahl an elektrischen Leitungen und Absicherungen geeignet miteinander verbunden werden müssen, wobei es auch erforderlich ist, die jeweils geltenden gesetzlichen Anforderungen zu erfüllen. Hierfür ist viel Fachwissen erforderlich. Zudem ist dies vergleichsweise zeitintensiv, zumal auch jeweils eine Funktionsprüfung durchgeführt werden muss, was zu hohen Montagekosten führt.

Bei einer Abwandlung wird ein vorkonfektionierter Schaltschrank verwendet, der bereits die für alle drei Komponenten erforderliche Verschaltung aufweist. Somit ist die Montage erleichtert, wobei kein besonderes Fachwissen erforderlich ist. Jedoch ist es in diesem Fall möglich, dass in einem Gebäude lediglich die Wärmepumpe verwendet wird, jedoch kein Batteriespeichersystem und/oder Wallbox. Somit ist der Erwerb von nicht benötigten Bauteilen erforderlich, und auch ein Platzbedarf ist unnötigerweise vergrößert. Zudem ist es beispielsweise möglich, dass die in dem vorkonfektionierteren Schaltschrank verwendeten Bauteil nicht für die verwendeten Komponenten ausgelegt sind. So ist es beispielsweise möglich, dass das Batteriespeichersystem eine vergrößerte Anzahl an elektrischen Speichern oder eine andere Art von Umrichter aufweist, insbesondere sofern eine Nachrüstung erfolgt. Somit ist wiederum eine Montage eines weiteren separaten Schaltschranks erforderlich.

Der Erfindung liegt die Aufgabe zugrunde, ein besonders geeignetes Schaltkastensystem sowie eine besonders geeignete Verwendung eines Schaltkastensystems anzugeben, wobei zweckmäßigerweise eine Montagezeit verkürzt und/oder Montagekosten reduziert sind, und wobei geeigneterweise ein Aufwand verringert und/oder eine Flexibilität erhöht ist.

Hinsichtlich des Schaltkastensystems wird diese Aufgabe durch die Merkmale des Anspruchs 1 und hinsichtlich der Verwendung durch die Merkmale des Anspruchs 10 erfindungsgemäß gelöst. Vorteilhafte Weiterbildungen und Ausgestaltungen sind Gegenstand der jeweiligen Unteransprüche.

Das Schaltkastensystem ist insbesondere zur Montage oder Anschluss an eine Gebäudeinstallation geeignet, sowie vorzugsweise vorgesehen und eingerichtet. Die Gebäudeinstallation dient dabei insbesondere der Bestromung einzelner Bestandteile eines Gebäudes und/oder darin angeordneter elektrischer Geräte. Geeigneterweise wird bei Betrieb mittels der Gebäudeinstallation eine dreiphasige Wechselspannung geführt und/oder bereitgestellt. Eine Amplitude der elektrischen Spannung beträgt zum Beispiel jeweils zwischen 380 V und 400 V oder zwischen 220 V und 240 V. Insbesondere sind hierbei die einzelnen Phasen zueinander um 120° versetzt. Zweckmäßigerweise wird mittels der Gebäudeinstallation zudem ein Neutralleiter und oder Masse bereitgestellt / verteilt. Zweckmäßigerweise ist die Gebäudeinstallation an ein Versorgungsnetz angeschlossen oder zumindest anschließbar.

Das Schaltkastensystem weist ein Hauptmodul auf, das einen Schaltkasten umfasst. Der Schaltkasten bildet zweckmäßigerweise ein Gehäuse und weist insbesondere eine Schale auf, die zum Beispiel aus einem Kunststoff gefertigt ist. Die Schale ist zweckmäßigerweise mittels eines Deckels abgedeckt, der beispielsweise schwenkbar an der Schale gelagert ist. Folglich ist der Deckel bevorzugt nach Art einer Tür ausgebildet. Vorzugsweise ist sowohl die Schale als auch der Deckel/Tür aus einem Kunststoff gefertigt, weswegen ein Berührschutz realisiert ist.

Geeigneterweise ist der Schaltkasten zum Anschluss an eine elektrische Leitung vorgesehen, und weist zweckmäßigerweise einen entsprechenden Anschluss oder Durchbruch/Durchführung auf, sodass die elektrische Leitung in den Schaltkasten geführt werden kann. Die Leitung ist hierbei insbesondere ein Bestandteil der Gebäudeinstallation oder zumindest für den Anschluss daran geeignet, sowie vorzugsweise hierfür vorgesehen und eingerichtet.

In dem Schaltkasten ist eine Funktionskomponente für eine Wärmepumpe oder ein Batteriespeichersystem angeordnet. Die Funktionskomponente dient dabei beispielsweise dem Betrieb der Wärmepumpe bzw. des Batteriespeichersystems und/oder zweckmäßigerweise der Absicherung hiervon. Geeigneterweise umfasst die Funktionskomponente einen Sicherungsautomaten, einen Leitungs- und/oder Geräteschutzschalter und/oder einen Fehlerstromschutzschalter. Alternativ oder in Kombination hierzu umfasst die Funktionskomponente einen Stromzähler. Bei einer Weiterbildung weist die Funktionskomponente zweckmäßigerweise ein Kommunikationsmodul auf, das insbesondere gemäß einem Bus-Standard ausgebildet ist. Beispielsweise umfasst hierbei das Komplikationsmodul ein Funkmodul, sodass der Anschluss an ein Funknetz ermöglicht ist, beispielsweise an ein WLAN-Netz und/oder an ein Mobilfunk-Netz. Zudem ist das Kommunikationsmodul vorzugsweise zur signaltechnischen Verbindung mit der Wärmepumpe/ Batteriespeichersystem geeignet, sowie vorgesehen und eingerichtet.

Die Wärmepumpe dient dabei insbesondere dem Beheizen des Gebäudes, beispielsweise eines Einfamilienhauses, eines Mehrfamilienhauses oder eines Fabrikgebäudes. Insbesondere weist hierbei die Wärmepumpe eine Nenn-Wärmeleistung zwischen 2,6 kW und 15 kW oder von bis zu 60 kW auf. Die Wärmpumpe umfasst zweckmäßigerweise einen Elektromotor, der mittels eines Umrichters betrieben ist. Geeigneterweise ist im Montagezustand die Wärmepumpe, zweckmäßigerweise zumindest Umrichter, über die Funktionskomponente mit der etwaigen Gebäudeinstallation elektrisch verbunden. Folglich ist die Wärmepumpe an das Hauptmodul angeschlossen, insbesondere sofern die Funktionskomponente für die Wärmepumpe vorgesehen ist. Hierfür ist beispielsweise eine Anschlussleitung in den Schaltkasten zu der Funktionskomponente geführt, und/oder der in den Schaltkasten ist ein Stecker zum Anschluss der Anschlussleitung eingebracht, der elektrisch mit der Funktionskomponente verbunden ist.

Das Batteriespeichersystem dient der Speicherung von elektrischer Energie. Insbesondere umfasst das Batteriespeichersystem einen batterieelektrischen Speicher. Mittels des Batteriespeichersystems oder zumindest des batterieelektrischen Speichers wird vorzugsweise eine elektrische Gleichspannung bereitgestellt.

Zweckmäßigerweise umfasst das Batteriespeichersystem einen Umrichter, der vorzugsweise mit dem batterieelektrischen Speicher elektrisch verbunden ist, und der insbesondere einphasig oder dreiphasig ausgebildet ist. Mittels des Umrichters, der insbesondere ein Wechselrichter ist, wird bei Betrieb die elektrische Gleichspannung in eine elektrische Wechselspannung umgeformt, die über die Funktionskomponente in die Gebäudeinstallation eingespeist wird. Somit ist in diesem Fall die Anschlussleitung insbesondere mit dem Umrichter und der Funktionskomponente/Stecker verbunden Vorzugsweise ist dem Batteriespeichersystem ein oder mehrere Photovoltaikmodule zugeordnet, mittels derer der batterieelektrische Speicher bei Betrieb geladen wird/werden kann, der auch lediglich als elektrischer Speicher bezeichnet wird.

Zusammenfassend ist die Funktionskomponente für die Wärmepumpe bzw. das Batteriespeichersystem geeignet, sowie vorzugsweise hierfür vorgesehen und eingerichtet. Folglich wird die Funktionskomponente für den Betrieb der Wärmepumpe bzw. des Batteriespeichersystem verwendet. Zweckmäßigerweise dient die Funktionskomponente hierbei stets der Absicherung der Wärmepumpe bzw. des Batteriespeichersystems. Insbesondere ist die Funktionskomponente auf die elektrische Ausgestaltung der Wärmepumpe/Batteriespeichersystems und/oder gesetzliche Vorgaben angepasst.

Vorzugsweise existieren zwei unterschiedliche Typen von Hauptmodulen, wobei eines hiervon für die Wärmepumpe und das andere für das Batteriespeichersystem vorgesehen ist. Somit ist das Schaltkastensystem nach Art eines Bausatzes ausgebildet und weist zwei unterschiedliche Typen von Hauptmodulen auf. Je nach verwendeter Wärmepumpe/Batteriespeichersystem wird somit das korrespondierende Hauptmodul herangezogen. In einer Weiterbildung sind beispielsweise für unterschiedliche Wärmepumpen auch unterschiedliche Hauptmodule vorhanden. Alternativ oder in Kombination hierzu sind für unterschiedliche Batteriespeichersysteme unterschiedliche Hauptmodule vorhanden.

Der Schaltkasten weist eine erste mechanische Schnittstelle zum Anschluss einer zweiten mechanischen Schnittstelle eines Schaltkastens eines Untermoduls auf, die Im Weiteren auch lediglich als Schnittstellen bezeichnet sind. Somit ist es möglich, an die erste mechanische Schnittstelle den Schaltkasten des Untermoduls anzuschließen. Der Schaltkasten des Untermoduls bildet hierbei vorzugsweise ein Gehäuse, das zum Beispiel eine Schale aufweist, die mittels eines Deckels abdeckbar ist. Geeigneterweise ist auch hier der Deckel nach Art einer Tür ausgebildet. Vorzugsweise sind die Schale und der Deckel aus einem Kunststoff gefertigt.

In dem Schaltkasten des Untermoduls ist eine weitere Funktionskomponente angeordnet. Die weitere Funktionskomponente dient beispielsweise einer weiteren Komponente, also zum Beispiel des Batteriespeichersystems, falls das Hauptmodul für die Wärmepumpe vorgesehen ist. Falls hingegen das Hauptmodul für das Batteriespeichersystem vorgesehen ist, dient das Untermodul insbesondere für den Betrieb der Wärmepumpe. In einer Weiterbildung ist die weitere Funktionskomponente für den Betrieb und/oder Absicherung einer Wallbox geeignet, insbesondere vorgesehen und eingerichtet. Die weitere Funktionskomponente ist hierauf jeweils entsprechend angepasst. Hierfür weist die weitere Funktionskomponente insbesondere einen entsprechend ausgebildeten / verschalteten Schutzschalter/Stromzähler oder dergleichen auf.

Vorzugsweise existieren unterschiedliche Typen von Untermodulen, wobei eines zum Beispiel für die Wärmepumpe, ein anderes für das Batteriespeichersystem und/oder ein anderes für die Wallbox vorgesehen ist. Somit ist das Schaltkastensystem nach Art eines Bausatzes ausgebildet und weist unterschiedliche Typen von Untermodulen auf. Je nach verwendeter weiterer Komponente wird somit das korrespondierende Untermodule herangezogen.

Zweckmäßigerweise ist eine weitere Anschlussleitung für die weitere Komponente in den Schaltkasten des Untermoduls geführt und/oder in den Schaltkasten ist ein Stecker zum Anschluss der weiteren Anschlussleitung eingebracht, der mit der weiteren Funktionskomponente elektrisch verbunden ist. Alternativ oder in Kombination hierzu umfasst die weitere Funktionskomponente ein weiteres Kommunikationsmodul, das beispielsweise baugleich zu dem etwaigen Kommunikationsmodul ist.

Aufgrund des Schaltkastensystems ist es somit möglich, zunächst das Hauptmodul zu montieren, wobei dieses insbesondere auf die jeweils verwendete Wärmepumpe/Batteriespeichersystem angepasst ist. Hierfür wird die entsprechend ausgebildete Funktionskomponente verwendet. Sofern das Gebäude die weitere Komponente aufweist, beispielsweise die Wallbox, ist es möglich, das hierauf angepasste Untermodul zu montieren. Falls hingegen eine andere weitere Komponente vorhanden ist, wird das hierauf entsprechend angepasste Untermodul verwendet. Falls gar keine weitere Funktionskomponente vorhanden ist, wird das Untermodul hingegen nicht montiert.

Aufgrund der ersten und zweiten mechanischen Schnittstelle ist eine konkrete Montageposition für das Untermodul bereitgestellt, und dieses wird mittels des Hauptmoduls beispielsweise zumindest auch stabilisiert. Infolgedessen ist es auch möglich, eine elektrische Kontaktierung dort entsprechend auszubilden. Zum Beispiel ist der ersten und zweiten mechanischen Schnittstelle jeweils auch eine elektrische Schnittstelle zugeordnet, mittels derer eine elektrische Kontaktierung des Untermoduls mit dem Hauptmodul erfolgt. Besonders bevorzugt weist dabei lediglich das Hauptmodul einen Anschluss an die Gebäudeinstallation auf, insbesondere an die entsprechende elektrische Leitung. Die elektrische Kontaktierung mit der Gebäudeinstallation des Untermoduls, also der weiteren Funktionskomponente, erfolgt insbesondere über das Hauptmodul. Somit ist eine elektrische Verschaltung vereinfacht und daher auch eine Montage. In einer Weiterbildung sind das Hauptmodul und das Untermodul zueinander baugleich, weswegen Gleichteile verwendet werden können.

Bei dem Schaltkastensystem werden somit lediglich die tatsächlich benötigten Module montiert, weswegen Materialkosten und auch Montagekosten reduziert sind. Dabei ist eine flexible Anpassung und/oder Nachrüstung stets möglich, wobei kein vollständiger Austausch erforderlich ist. Ferner ist auch ein Platzbedarf nicht unnötig erhöht. Da die Funktionskomponenten bereits innerhalb des jeweiligen Schaltkastens angeordnet sind, ist bei Montage keine oder leidglich eine geringfügige zusätzliche Verkabelung erforderlich. Somit ist ein Aufwand verringert und eine Montagezeit verkürzt.

Zweckmäßigerweise sind die Schaltkästen zur Montage an einer Wand geeignet, sowie vorgesehen und eingerichtet. Hierbei weisen die Schaltkästen zweckmäßigerweise die Schale auf, deren Boden insbesondere zur Montage an der Wand geeignet ist. Der jeweilige Deckel verläuft im geschlossenen Zustand parallel zu der zugeordneten Wand, ist jedoch zu dieser beabstandet. Somit ist die Montage erleichtert, und ein nachträglicher Zugang zur jeweiligen Funktionskomponente ermöglicht.

Vorzugsweise greifen einzelne Teile der beiden Schnittstellen ineinander ein, was eine Stabilität verbessert. Beispielsweise sind hierbei die beiden mechanischen Schnittstellen nach Art von Steckern oder dergleichen ausgebildet. Geeigneterweise weist zumindest eine der mechanischen Schnittstellen eine oder mehrere Laschen auf, die in entsprechende Aufnahmen der jeweils anderen Schnittstelle eingreifen. Diese sind beispielsweise stets geöffnet, weswegen keine besonderen Arbeiten für die Montage erforderlich sind. Alternativ sind die Aufnahmen abgedeckt, sofern diese nicht verwendet werden. Zum Beispiel ist die Abdeckung beweglich nach Art eines Schiebers, oder die Abdeckung wird herausgebrochen, sobald die die jeweilige Aufnahme das erste Mal verwendet werden soll. Somit ist eine Montage und Herstellung vereinfacht. Zum Beispiel ist die Laschen nach Art einer Rastlasche ausgebildet und umgreift einen der Aufnahme zugeordneten Zapfen. Alternativ oder in Kombination hierzu erfolgt zudem eine Sicherung mittels einer zusätzlichen Schraube oder dergleichen. Somit ist ein unbeabsichtigtes Lösen der beiden Schnittstellen voneinander vermieden.

Vorzugsweise weist der Schaltkasten des Hauptmoduls und/oder des Untermoduls eine Hutschiene auf, an dem der etwaigen Sicherungsautomat/Schutzschalter befestigt ist. Somit können für die jeweilige Funktionskomponente anreihbare Geräte verwendet werden, also zum Beispiel bereits bestehende Bauteile, weswegen Herstellungskosten reduziert sind. Alternativ oder in Kombination hierzu ist beispielsweise in zumindest einen der Schaltkasten eine Steckdose oder dergleichen eingebracht, über die insbesondere elektrische Spannung nach außen geführt ist. Beispielsweise ist hierbei die Steckdose zusätzlich abgesichert. Aufgrund der Steckdose ist somit der, beispielsweise vorübergehende, Anschluss eines anderen elektrischen Geräts möglich, zum Beispiel eines Staubsaugers, einer Lampe oder dergleichen, das insbesondere zur Wartung und/oder Montage der jeweiligen Komponente kurzzeitig benötigt wird.

Beispielsweise weist das Schaltkastensystem lediglich das Hauptmodul auf. Somit ist ein vergleichsweise kleinbauendes und kostengünstiges Schaltkastensystem bereitgestellt. Aufgrund der ersten mechanischen Schnittstelle ist dabei dennoch jederzeit ein Nachrüsten mit dem Untermodul ermöglicht. Besonders bevorzugt jedoch ist das Untermodul vorhanden, das mittels der zweiten mechanischen Schnittstelle an der ersten mechanischen Schnittstelle angeschlossen ist. Infolgedessen sind somit die Funktionskomponente als auch die weitere Funktionskomponente vorhanden, und das Schaltkastensystem kann für den Betrieb und/oder Absicherung von zwei unterschiedlichen Komponenten verwendet werden. Hierbei sind die beiden Module zueinander im Wesentlichen unabhängig und/oder zumindest die Funktionskomponenten, die auf die jeweilige Komponente, also zum Beispiel die Wärmepumpe/Batteriespeichersystem/Wallbox, angepasst ist. Dabei ist mittels jeder Funktionskomponente jeweils eine der Komponenten mit der Gebäudeinstallation elektrisch verbunden.

Beispielsweise sind die Schnittstellen an einer Vorderseite angeordnet, sodass insbesondere bei Montage des Untermoduls eine Einbautiefe des Schaltkastensystems vergrößert wird. Beispielsweise stehen dabei die beiden Module auf einem Boden auf. Besonders bevorzugt jedoch befinden sich die Schnittstellen an einander zugewandten und parallel zueinander verlaufenden Stirnseiten des jeweiligen Schaltkastens. Insbesondere verlaufen diese hierbei senkrecht zu der Wand, an der im Montagezustand die Module befestigt sind. Die Stirnseiten verlaufen dabei zum Beispiel in einer vertikalen Richtung, und die beiden Schaltkästen sind im Montagezustand somit nebeneinander angeordnet sind. Besonders bevorzugt jedoch sind die mechanischen Schnittstellen Horizontal angeordneten Stirnseiten zugeordnet, und im Montagezustand sind die Schaltkästen vorzugsweise in vertikaler Richtung übereinander angeordnet. Somit ist eine vergleichsweise effizienter Platzausnutzung ermöglicht. Zweckmäßigerweise befindet sich dabei das Hauptmodul stets an der in vertikaler Richtung untersten Stelle, und das Untermodul wird somit oben angebaut. Somit ist der Anschluss an die elektrische Leitung der Gebäudeinstallation vereinfacht. Auch ist somit stets bei Montage des Hauptmoduls bereits bekannt, wo Bauraum zur Montage der etwaigen Untermodul bereitgehalten werden soll.

Zweckmäßigerweise sind im Montagezustand die beiden Längsseiten der im Wesentlichen schachtel- oder quaderförmigen Schaltkasten zueinander versetzt oder geeigneterweise zueinander bündig. Die Längsseiten verlaufen hierbei insbesondere senkrecht zu den Stirnseiten. Somit ist einerseits ein optisches Aussehen verbessert. Andererseits ist auf diese Weise keine Verletzungsgefahr gegeben, und eine Platzausnutzung ist verbessert.

Beispielsweise weist der Schaltkasten des Hauptmoduls noch weitere mechanische Schnittstellen auf. Besonders bevorzugt jedoch ist bei dem Schaltkasten des Hauptmoduls lediglich die erste mechanische Schnittstelle vorhanden. Somit stellt das Hauptmodul insbesondere ein Ende des Schaltkastensystems dar, was den Anschluss an die etwaige elektrische Leitung erleichtert. Zum Beispiel weist der Schaltkasten des Untermoduls lediglich die zweite mechanische Schnittstelle auf. Besonders bevorzugt jedoch weist der Schaltkasten des Untermoduls eine erste mechanische Schnittstelle zum Anschluss einer zweiten mechanischen Schnittstelle eines Schaltkastens eines weiteren Untermoduls auf. Insbesondere ist an die erste mechanische Schnittstelle des Untermoduls die zweite mechanische Schnittstelle des weiteren Untermoduls angeschlossen, das somit ein en Bestandteil des Schaltkastensystems bildet. Die ersten mechanischen Schnittstellen und zweiten mechanischen Schnittstellen sind dabei zweckmäßigerweise jeweils zueinander baugleich. Die Schaltkästen der beiden Untermodule sind zweckmäßigerweise zueinander baugleich. Somit weist auch das weitere Untermodul die erste mechanische Schnittstelle auf. Somit ist es beispielsweise möglich, das weitere Untermodul direkt an das Hauptmodul anzuschließen, und somit beispielsweise des Untermodul durch das weitere Untermodul zu ersetzen, falls sich beispielsweise die vorhandenen Komponenten verändert haben.

Zweckmäßigerweise weist das weitere Untermodul ebenfalls eine weitere Funktionskomponente auf, wobei sich diese zum Beispiel von der weiteren Funktionskomponente des Untermoduls unterscheidet. Somit ist es möglich, mittels des Schaltkastensystems eine Vielzahl unterschiedlicher Komponenten zu betreiben oder zumindest abzusichern.

Zweckmäßigerweise befinden sich die erste mechanische Schnittstelle und die zweite mechanische Schnittstelle an gegenüberliegenden Stirnseiten des (jeweiligen) Schaltkastens. Somit ist es möglich, bei dem Schaltkastensystem mehrere Untermodule in einer LED übereinander anzuordnen und aneinander anzuschließen, was die Montage erleichtert. Dabei ist eine Platzausnutzung vergleichsweise effizient. Hierbei weist jedes der Untermodule die entsprechende Funktionskomponente und/oder eine hierauf angepasste Verkabelung/Verschaltung auf. Aufgrund einer derartigen Ausbildung ist es möglich, aus unterschiedlichen Untermodule auszuwählen und das Schaltkastensystem flexibel auf die vorhandene Gebäudeinstallation und/oder vorhandenen Komponenten anzupassen. Hierbei ist bei einer Änderung/Austausch eine der Komponenten insbesondere lediglich die Anpassung/Austausch des zugeordneten Moduls erforderlich, jedoch nicht des vollständigen Schaltkastensystems.

Beispielsweise sind das Hauptmodul und das Untermodul elektrisch zueinander isoliert, oder mittels Stromschienen oder dergleichen miteinander elektrisch verbunden. Beispielsweise weisen die mechanischen Schnittstellen entsprechende Stecker zur elektrischen Kontaktierung der Module untereinander auf. Besonders bevorzugt jedoch weist das Untermodul eine erste Verkabelungsleitung mit einem ersten Kontakt auf. Die erste Verkabelungsleitung weist dabei beispielsweise ein Kabel oder mehrere Kabel auf, wobei jedem Kabel zum Beispiel eine oder mehrere Litzen zugeordnet sind. Beispielsweise sind die Kabel der erste Verkabelungsleitung zueinander unterschiedlich lang. Geeigneterweise jedoch sind diese gleich lang. Zweckmäßigerweise ist, sofern mehrere Kabel vorhanden sind, jedem davon der erste Kontakt zugeordnet, der somit mehrere Kontaktteile aufweist. Die Kontaktteile sind beispielsweise mittels einer gemeinsamen Baueinheit gebildet, oder zueinander separat.

Die erste Verkabelungsleitung ist aus dem Schaltkasten des Untermoduls geführt, vorzugsweise auf der dem Hauptmodul zugewandten Stirnseite. Somit ragt die erste Verkabelungsleitung aus dem Schaltkasten des Untermoduls heraus. Der erste Kontakt ist mit einem entsprechenden ersten Gegenkontakt des Hauptmoduls verbunden. Zweckmäßigerweise ist die erste Verkabelungsleitung mit der weiteren Funktionskomponente des Untermoduls elektrisch kontaktiert, und mittels der ersten Verkabelungsleitung erfolgt beispielsweise eine elektrische Kontaktierung der Module untereinander, also beispielsweise des Untermoduls und das Hauptmoduls. Alternativ oder in Kombination hierzu erfolgt mittels der ersten Verkabelungsleitung eine elektrische Kontaktierung des Untermoduls mit der etwaigen elektrischen Leitung der Gebäudeinstallation. Bei einer Weiterbildung werden mittels der ersten Verkabelungsleitung zusätzlich oder alternativ beispielsweise Daten/Signale übertragen.

Der erste Gegenkontakt ist beispielsweise in den Schaltkasten des Hauptmoduls eingebracht, vorzugsweise die Stirnseite oder eine der Längsseiten. Besonders bevorzugt jedoch ist die erste Verkabelungsleitung in den Schaltkasten des Hauptmoduls geführt, und der erste Gegenkontakt befindet sich innerhalb des Schaltkastens des Hauptmoduls. Hierfür weist der Schaltkasten des Hauptmoduls beispielsweise einen entsprechend ausgebildeten Durchbruch oder zumindest eine Öffnung auf, sodass das Einführen in den Schaltkasten des Hauptmoduls ermöglicht ist. Somit ist die elektrische Verbindung der der beiden Module untereinander geschützt und berührsicher. Ferner ist auf diese Weise die elektrische Kontaktierung und Verkabelung der beiden Module untereinander vergleichsweise zeitsparend möglich, und hierfür wird insbesondere lediglich der erste Kontakt mit dem ersten Gegenkontakt verbunden. Somit eine Montagezeit weiter verkürzt, und daher auch Montagekosten.

Beispielsweise sind der erste Kontakt und der erste Gegenkontakt als zueinander korrespondierende Stecker ausgebildet. Bevorzugt jedoch ist der erste Kontakt oder der erste Gegenkontakt nach Art einer Klemmleiste ausgebildet, die zweckmäßigerweise mehrpolig ist. Das jeweilige Gegenstück, also der erste Gegenkontakt bzw. der erste Kontakt ist geeigneterweise mittels einer abisolierten Litze oder einem Kabelende gebildet, an dem in einer Weiterbildung zum Beispiel ein Kabelschuh angeordnet ist.

Beispielsweise weist das Untermodul ebenfalls einen entsprechenden Gegenkontakt auf, mit dem ein entsprechend ausgebildeter Kontakt der ersten Verkabelungsleitung verbunden ist. Somit ist es möglich, unterschiedliche erste Verkabelungsleitungen zu verwenden, und diese beispielsweise auf den jeweiligen Anwendungsfall anzupassen. Besonders bevorzugt jedoch ist die erste Verkabelungsleitung verliersicher an weiteren Bestandteilen des Untermoduls befestigt. Beispielsweise ist diese dort angespritzt oder verklebt. Alternativ hierzu ist die erste Verkabelungsleitung mit den weiteren Bestandteilen des Untermoduls verklemmt oder bevorzugt in Steckklemmen einer Klemmleiste eingesteckt. Zumindest ist die erste Verkabelungsleitung zweckmäßigerweise vorkonfektioniert und auf die Montage an dem Hauptmodul angepasst.

Der erste Gegenkontakt ist insbesondere derart angeordnet, dass dieser mittels der ersten Verkabelungsleitung erreicht werden kann, wobei jedoch im Wesentlichen kein zusätzliches Spiel zur Verfügung steht. Somit ist ein fehlerhaftes Anschließen der ersten Verkabelungsleitung im Wesentlichen ausgeschlossen, und die Montage kann im Wesentlichen ohne zusätzliches Spezialwissen erfolgen. Auch ist es aufgrund der verliersichere Anbindung nicht erforderlich, bei Montage des Untermoduls, dieses zu öffnen, weswegen die Montagezeit weiter verkürzt ist.

Zum Beispiel ist lediglich die erste Verkabelungsleitung vorhanden. Besonders bevorzugt jedoch weist das Untermodul eine zweite Verkabelungsleitung mit einem zweiten Kontakt. Die zweite Verkabelungsleitung weist beispielsweise lediglich ein einziges Kabel oder mehrere Kabel auf. Zweckmäßigerweise sind hierbei sämtliche Kabel der zweiten Verkabelungsleitung gleich lang. Der zweite Kontakt ist zweckmäßigerweise baugleich zu dem ersten Kontakt, sodass Gleichteile verwendet werden können. So ist beispielsweise der zweite Kontakt mittels einer einzelnen Baueinheit oder mehrere Kontaktteile bereitgestellt. Auch die zweite Verkabelungsleitung ist, vorzugsweise auf der dem Hauptmodul zugewandten Stirnseite, aus dem Schaltkasten des Untermoduls heraus und in den Schaltkasten des Hauptmoduls geführt. Der zweite Kontakt ist mit einem zugeordneten zweiten Gegenkontakt verbunden, der vorzugsweise baugleich zu dem ersten Gegenkontakt ist.

Die beiden Verkabelungsleitungen weisen unterschiedliche Längen auf, und die Gegenkontakte sind insbesondere derart positioniert, dass diese mittels der jeweils zugeordneten Verkabelungsleitung erreicht werden können, wobei jedoch jeweils i Wesentlichen kein Spiel vorhanden ist. Somit ist die Zuordnung der Kontakte zu dem jeweiligen Gegenkontakte im Wesentlichen eindeutig, und ein fehlerhaftes Anschließen ist somit sicher vermieden. Folglich ist auch hier kein besonderes Spezialwissen zur Montage erforderlich. Beispielsweise wird bei Betrieb mittels beider Verkabelungsleitungen elektrische Signale und/oder elektrische Energie übertragen. Besonders bevorzugt jedoch ist einer der Gegenkontakte als ein Blindkontakt ausgebildet. Diese ist elektrisch von weiteren Bestandteilen des Hauptmoduls isoliert. Dahingegen sind die beiden Verkabelungsleitungen mit der weiteren Funktionskomponente verbunden und insbesondere mit den gleichen Signalen/elektrischen Energie beaufschlagt. Somit erfolgt die elektrische Verbindung mittels jeweils lediglich einer der Verkabelungsleitungen, wobei aufgrund der beiden Verkabelungsleitungen eine Flexibilität bei Montage erhöht ist. Auch ist es beispielsweise möglich, unterschiedliche Arten von Modulen zu verwenden.

Vorzugsweise weist der Schaltkasten des Untermoduls eine erste Öffnung zum Einführen der ersten Verkabelungsleitung des etwaigen weiteren Untermoduls auf. Insbesondere befindet sich dabei die erste Öffnung an der Stirnseite, der insbesondere auch die etwaige erste Schnittstelle zugeordnet ist. Beispielsweise weist das Untermodul einen entsprechenden weiteren Gegenkontakt auf, mit dem der erste Kontakt des weiteren Untermoduls verbunden ist. Der weitere Gegenkontakt ist dabei zum Beispiel mit der ersten und/oder zweiten Verkabelungsleitung des Untermoduls elektrisch verbunden, über die dann eine elektrische Verbindung des weiteren Untermoduls mit dem Hauptmodul erfolgt. Somit erfolgt zweckmäßigerweise ein elektrisches Durchschleifen. Alternativ weist der Schalkasten des Untermoduls auf der dem Hauptmodul zugewandten Seite eine weitere Öffnung auf, durch die die erste Verkabelungsleitung des weiteren Untermoduls in den Schaltkasten des Hauptmoduls geführt und mit dem dort angeordneten weiteren Gegenkontakt des Hauptmoduls verbunden ist. Infolgedessen erfolgt ebenfalls ein Durchschleifen, wobei dies jedoch mittels der ersten Verkabelungsleitung direkt erfolgt. Somit ist insbesondere eine elektrische Beeinflussung der Funktionskomponente des Untermoduls ausgeschlossen.

Zum Beispiel ist die Länge der ersten Verkabelungsleitung des weiteren Untermoduls im Vergleich zur Länge der ersten Verkabelungsleitung des Untermoduls vergrößert, sodass das weitere Untermodul mit dem Hauptmodul verbunden werden kann. Dabei sind die Längen der beiden ersten Verkabelungsleitungen zweckmäßigerweise derart ausgewählt, dass lediglich eine elektrische Kontaktierung mit dem jeweils zugeordneten weiteren Gegenkontakt folgen kann. Besonders bevorzugt jedoch sind die ersten Verkabelungsleitungen der beiden Untermodule gleich lang. Vorzugsweise weisen die Untermodule dabei zudem die zweite Verkabelungsleitung auf, die im Vergleich zu der jeweiligen ersten Verkabelungsleitung vergrößert ist. Somit ist es möglich, insbesondere mit Ausnahme der jeweiligen weiteren Funktionskomponente, die Untermodule baugleich auszugestalten, was vorzugsweise auch erfolgt. Hierbei wird beispielsweise von dem Untermodul die erste Verkabelungsleitung in den Schaltkasten des Hauptmoduls und von dem weiteren Untermodul durch das Untermodul die zweite Verkabelungsleitung in den Schaltkasten des Hauptmoduls geführt. Die Länge der Verkabelungsleitungen ist hierbei entsprechend angepasst.

Besonders bevorzugt jedoch weist der Schaltkasten des Untermoduls eine zweite Öffnung zum Einführen der zweite Verkabelungsleitung des weiteren Untermoduls auf. In einer Alternative sind beide Verkabelungsleitung des weiteren Untermoduls mit entsprechenden Gegenkontakte des Untermoduls verbunden. Besonders bevorzugt jedoch umfasst der Schaltkasten des Untermoduls die dem Modul zugewandte weitere Öffnung, durch die eine der Verkabelungsleitungen des weiteren Untermoduls geführt und mit den entsprechenden weiteren Gegenkontakten des Hauptmoduls verbunden ist. Diese Verkabelungsleitung ist somit durch das Untermodul durchgeschleift. Die andere Verkabelungsleitung des weiteren Untermoduls ist hingegen mit einem weiteren Blindkontakt des Untermoduls verbunden, der sich innerhalb des Schaltkastens des Untermoduls befindet. Somit wird, je nach Montageposition des Untermoduls, eine der Verkabelungsleitungen zur elektrischen Kontaktierung mit dem Hauptmodul verwendet. Folglich ist es möglich, die Längen der ersten Verkabelungsleitungen und die Längen der zweiten Verkabelungsleitungen gleich zu wählen, wobei dennoch ein Austausch der Position des beiden Untermodule ermöglicht ist, was eine Flexibilität erhöht.

Bei dem direkt an das Hauptmodul angeschlossen Untermodul wird insbesondere die erste Verkabelungsleitung für die elektrische Verbindung verwendet, die im Vergleich zur zweiten Verkabelungsleitung verkürzt ist. Bei dem weiteren Untermodul hingegen wird die zweite Verkabelungsleitung für die elektrische Verbindung verwendet, die durch das Untermodul hindurch zu dem Hauptmodul geführt ist. Die jeweils anderen Verkabelungsleitungen sind mit entsprechend ausgebildeten Blindkontakten des Hauptmoduls bzw. des Untermoduls verbunden. Somit ist jeder der Verkabelungsleitungen mit einem entsprechenden Gegenkontakt verbunden, weswegen keine Auswahl erforderlich ist. Somit ist keine Fachkenntnis oder dergleichen bei Montage erforderlich, wobei dennoch eine sichere Verkabelung erfolgt. Zudem ist die Verkabelung in einer vergleichsweise kurzen Zeit durchführbar. Zweckmäßigerweise sind die Längen der Verkabelungsleitungen derart gewählt, dass jeweils lediglich der zugeordnete Gegenkontakt damit erreicht werden kann.

Sofern beispielsweise die Hutschiene bei dem Untermodul vorhanden ist, ist diese zweckmäßigerweise verstellbar gelagert. Somit ist insbesondere ein Durchführen der jeweiligen Verkabelungsleitung durch den Schaltkasten des Untermoduls hindurch zu dem Hauptmodul erleichtert. Auch ist somit eine nachträgliche Montage des weiteren Untermoduls ermöglicht, ohne dass hierfür beispielsweise bereits bestehend vorhandene Bauteile des Untermoduls übermäßig angepasst und/oder umpositioniert werden müssten. Vielmehr wird lediglich zur Montage die Hutschiene verschoben oder verschwenkt, wobei die elektrische Kontaktierung nicht verändert wird. Nach erfolgter Montage, insbesondere nach dem Durchziehen des entsprechenden Verkabelungsleitung hinter der Hutschiene hindurch, wird die Hutschiene in die ursprüngliche Position bewegt.

Ein Schaltkastensystem, das ein Hauptmodul und ein Untermodul aufweist, wird zur Verkabelung einer Wärmepumpe, eines Batteriespeichersystems und/oder einer Wallbox verwendet. Dabei weist sowohl des Hauptmodul als auch das Untermodul jeweils einen Schaltkasten auf, in dem eine Funktionskomponente angeordnet ist. Jede der Funktionskomponenten ist hierbei insbesondere jeweils entweder auf die Wärmepumpe, das Batteriespeichersystem oder die Wallbox angepasst. Zum Beispiel umfasst das Schaltkastensystem zwei Untermodule, sodass zum Beispiel eine Verkabelung der Wärmepumpe, des Batteriespeichersystems und der Wallbox erfolgt, für die jeweils eine der Funktionskomponenten vorgesehen ist. Die Schaltkästen des Hauptmoduls und des Untermoduls sind mittels einer jeweiligen mechanischen Schnittstelle aneinander angebunden. Aufgrund der Schnittstellen sind somit die Schaltkästen zueinander positioniert. Beispielsweise sind diese aneinander befestigt. Geeigneterweise sind diese miteinander verrastet. Geeigneterweise erfolgt zudem eine elektrische Kontaktierung der Module miteinander.

Die Erfindung betrifft ferner ein entsprechendes Hauptmodul, das somit insbesondere einen Schaltkasten umfasst, in dem eine Funktionskomponente für eine Wärmepumpe oder ein Batteriespeichersystem angeordnet ist, wobei der Schaltkasten eine erste mechanische Schnittstelle zum Anschluss einer zweiten mechanische Schnittstelle eines Schaltkastens eines Untermoduls aufweist. Zudem betrifft die Erfindung ein entsprechendes Untermodul, das einen Schaltkasten umfasst, in dem eine weitere Funktionskomponente angeordnet ist, wobei der Schaltkasten eine zweite mechanische Schnittstelle zum Anschluss einer ersten mechanische Schnittstelle eines Schaltkastens eines Hauptmoduls aufweist. Die weitere Funktionskomponente ist dabei insbesondere einer Wärmepumpe, einem Batteriespeichersystem oder einer Wallbox zugeordnet und dient insbesondere deren Absicherung.

Sofern ein Bauteil als erstes, zweites, ... Bauteil bezeichnet wird, bezeichnet dies lediglich ein bestimmtes Bauteil. Insbesondere bedeutet dies nicht, dass eine entsprechende Anzahl derartiger Bauteile vorhanden ist.

Die im Zusammenhang mit dem Schaltkastensystem erläuterten Weiterbildungen und Vorteile sind sinngemäß auch auf das Hauptmodul / das Untermodul / die Verwendung sowie untereinander zu übertragen und umgekehrt.

Nachfolgend wird ein Ausführungsbeispiel der Erfindung anhand einer Zeichnung näher erläutert. Darin zeigen:
- Fig. 1: schematisch ein Gebäude mit einem Schaltkastensystem, das ein Hauptmodul und zwei Untermodule aufweist, die jeweils einen Schaltkasten mit einer ersten und zweiten mechanischen Schnittstelle aufweisen,
- Fig. 2, 3: schematisch in einer Drauf- bzw. Seitenansicht das Hauptmodul,
- Fig. 4: schematisch in einer Draufsicht das Hauptmodul, wobei eine Tür weggelassen ist,
- Fig. 5: schematisch in einer Draufsicht eines der Untermodule,
- Fig. 6: schematisch in einer Draufsicht schematisch das Untermodul, wobei eine Tür weggelassen ist,
- Fig. 7: perspektivisch das Untermodul,
- Fig. 8: ausschnittsweise vergrößert das Untermodul, und
- Fig. 9 -11: jeweils in Rückansicht zwei der Schaltkästen in unterschiedlichen Stadien der Anbindung der ersten mechanischen Schnittstelle an der zweiten mechanischen Schnittstelle.

Einander entsprechende Teile sind in allen Figuren mit den gleichen Bezugszeichen versehen.

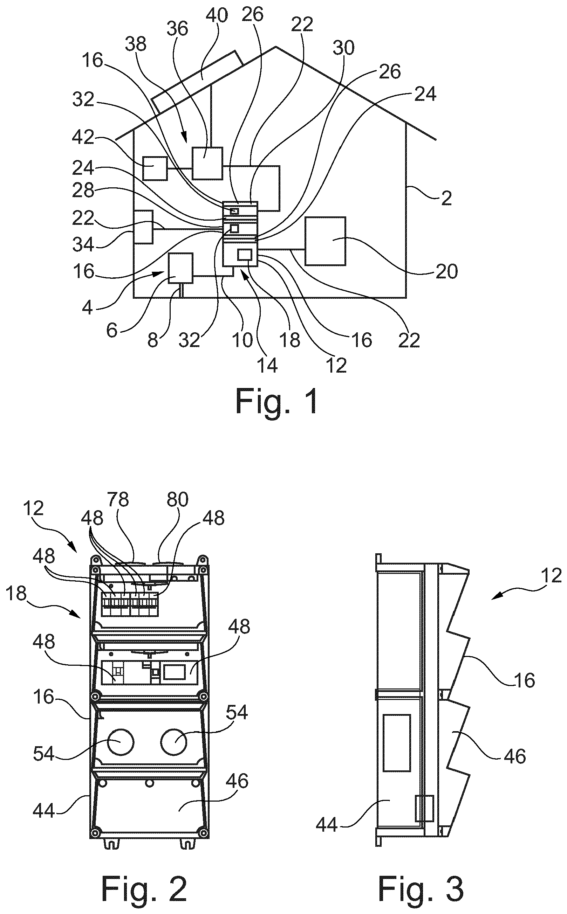

In Figur 1 ist schematisch vereinfacht ein Gebäude 2 dargestellt. Dieses weist eine Gebäudeinstallation 4 auf, die einen zentralen Verteilerschrank 6 umfasst. Der Verteilerschrank 6 ist an ein Versorgungsnetz 8 angeschlossen, mittels dessen eine dreiphasige Wechselspannung bereitgestellt ist. Eine elektrische Leitung 10 ist von dem Verteilerschrank 6 zu einem Hauptmodul 12 eines Schaltkastensystems 14 geführt, dass daran angeschlossen ist.

Das Hauptmodul 12 weist einen Schaltkasten 16 auf, in den die elektrische Leitung 10 hineingeführt und dort mit einer Funktionskomponente 18 elektrisch kontaktiert ist. Die Funktionskomponente 18 dient der Absicherung einer Wärmepumpe 20, die dort mittels einer Anschlussleitung 22 angeschlossen ist. Der Schaltkasten 16 weist eine erste mechanische Schnittstelle 24 auf, an die eine zweite mechanische Schnittstelle 26 eines Schaltkastens 16 eines Untermoduls 28 angeschlossen ist. Auf der der zweiten mechanischen Schnittstelle 26 abgewandten Seite weist der Schaltkasten 16 des Untermoduls 28 auch die erste mechanische Schnittstelle 24 auf, an die die zweite mechanische Schnittstelle 26 des Schaltkastens 16 eines weiteren Untermoduls 30 angeschlossen ist. Der Schaltkasten 16 des weiteren Untermoduls 30 ist dabei baugleich zu dem Schaltkasten 16 des Untermoduls 28, weswegen auch das weitere Untermodul 30 die zweite mechanische Schnittstelle 26 aufweist.

Innerhalb des Schaltkastens 16 des Untermoduls 28 und des weiteren Untermoduls 30 ist jeweils eine weitere Funktionskomponente 32 angeordnet, wobei sich diese zwischen den beiden Untermodule 28, 30 und zu der Funktionskomponente 18 des Hauptmoduls 12 unterscheiden. An das Untermodul 28 ist über eine zugeordnete Anschlussleitung 22 eine Wallbox 34 angeschlossen und mit der zugeordneten weiteren Funktionskomponente 32 elektrisch kontaktiert. Diese dient der elektrischen Absicherung der Wallbox 34.

Mit der weiteren Funktionskomponente 32 des weiteren Untermoduls 30 ist ein Umrichter 36 eines Batteriespeichersystems 38 mittels einer entsprechenden Anschlussleitung 22 elektrisch kontaktiert. Der Umrichter 36 ist mehreren Photovoltaikmodulen 40 elektrisch kontaktiert, mittels derer bei Betrieb eine elektrische Gleichspannung bereitgestellt wird. Zudem weist das Batteriespeichersystem 38 einen elektrischen Speicher 42 auf, der mit dem Umrichter 36 elektrisch kontaktiert ist. Die Funktionskomponente 32 des weiteren Untermoduls 30 ist auf das Batteriespeichersystem 38 angepasst, und weist dient ebenfalls deren Absicherung. Auch ist dieser weiteren Funktionskomponente 32 ein Stromzähler zugeordnet ist.

Zusammenfassend weist somit das Gebäude 2 drei unterschiedliche Komponenten auf, nämlich die Wärmepumpe 20, die Wallbox 34 und das Batteriespeichersystem 38, den jeweils eines der Module 12, 28, 30 zugeordnet ist. Mittels der Module 12, 28, 30 des Schaltkastensystems 14 wird dabei die jeweils zugeordnete Komponente zumindest elektrisch abgesichert. Auch sind sämtlich Komponenten über das Hauptmodul 12 und mittels der (gemeinsamen) elektrischen Leitung 10 mit dem Verteilerschrank 6 elektrisch kontaktiert.

In Figur 2 ist in einer Draufsicht und in Figur 3 einer Seitenansicht das Hauptmodul 12 dargestellt. Mittels des Schaltkasten 16 ist ein Gehäuse bereitgestellt, das eine Schale 44 aufweist, die mittels eines Deckels 46 abgedeckt ist. Die Deckel 46 ist nach Art einer Tür ausgebildet und schwenkbeweglich an der Schale 44 gelagert. Hierbei ist es auch möglich, den Deckel 46 vollständig von der Schale 44 zu entfernen.

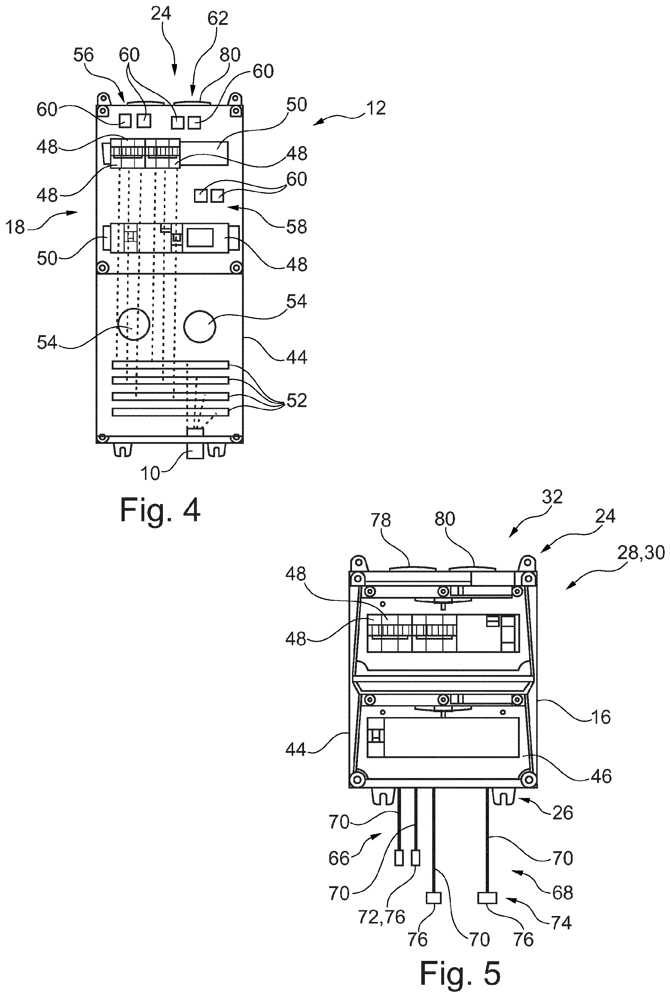

In Figur 4 ist das Hauptmodul 12 in einer Draufsicht schematisch mit abgenommenem Deckel 46 gezeigt. Die Funktionskomponente 18 weist mehrere anreihbare Geräte 48 in Form von Schutzschaltern und Fehlerschutzschaltern auf, die auf zwei unterschiedlichen Hutschienen 50 montiert sind. Die anreihbaren Geräte 48 sind mit zumindest einer von insgesamt vier Stromschienen 52 elektrisch kontaktiert, nämlich jeweils einer, die mit einer Phasenleitung der elektrischen Leitung 10 elektrisch kontaktiert ist. Dabei sind die anreihbare Geräte 48 zumindest teilweise mit unterschiedlichen der Stromschienen 52 elektrisch kontaktiert, die bei Betrieb somit ein unterschiedliches elektrisches Potential aufweisen. Eine weitere der Stromschienen 52 ist mit einem Neutralleiter der elektrischen Leitung 10 elektrisch kontaktiert. Eine nicht näher dargestellte weitere Stromschiene oder ein sonstiger Massepunkt ist mit einer ebenfalls nicht dargestellten Masseleitung der elektrischen Leitung 10 elektrisch kontaktiert.

Die anreihbaren Geräte 48 sind zudem mit der zugeordneten Anschlussleitung 22, nämlich einer jeweiligen Ader, elektrisch kontaktiert. Eine weiter Ader der Anschlussleitung 22 ist mit der dem Neutralleiter zugeordneten Stromschiene 52 und eine andere Ader der Anschlussleitung 22 ist mit dem Massepunkt elektrisch kontaktiert. Die anreihbare Geräte 48 ragen durch entsprechend ausgebildete Öffnungen des Deckels 46, sodass diese von außen betätigbar sind. Somit ist es auch bei geschlossenem Deckel 46 möglich, die Wärmepumpe 20 stromlos zu schalten.

Auch sind durch andere Öffnungen des Deckels 46 zwei Steckdosen 54 geführt, die über eine nicht näher dargestellte Absicherung mit zumindest einigen der Stromschienen 52 elektrisch kontaktiert sind. Aufgrund des Steckdosen 54 ist somit ein Anschluss eines elektrischen Geräts, beispielsweise eines Staubsaugers, an das Hauptmodul 12 ermöglicht, ohne dass hierfür der Deckel 46 entfernt werden müsste. Somit ist ein sicherer Betrieb ermöglicht, und es ist kein zusätzlicher Berührschutz für die Stromschienen 52 vorzusehen.

Innerhalb des Schaltkastens 16 sind ferner ein erster Gegenkontakt 56 und ein zweiter Gegenkontakt 58 angeordnet, die jeweils zwei zueinander separate Kontaktteile 60 aufweisen. Auch ist in dem Schaltkasten 16 des Hauptmoduls 12 ein weiterer Gegenkontakt 62 mit den beiden Kontaktteilen 60 angeordnet. Die drei Gegenkontakte 56, 58, 62 sind zueinander baugleich, wobei jedoch deren Positionen zueinander versetzt sind. So sind der weitere Gegenkontakt 62 und der erste Gegenkontakt 56 an dem in vertikaler Richtung oberen Ende des Schaltkastens 16 in einer gemeinsamen horizontalen Ebene angeordnet, jedoch zueinander seitlich versetzt. Mittels dieses Endes des Schaltkastens 16 ist auch die erste mechanische Schnittstelle 24 gebildet. Der zweite Gegenkontakt 58 ist bezüglich des weiteren Gegenkontakts 62 lediglich in vertikaler Richtung nach unten versetzt. Sowohl der erste Gegenkontakt 56 als auch der weitere Gegenkontakt 62 sind über nicht näher dargestellte Stromschienen und/oder eine feste Verkabelung mit den Stromschienen 52 und daher mit der elektrischen Leitung 10 elektrisch kontaktiert. Der zweite Gegenkontakt 58 hingegen ist elektrisch isoliert und somit als ein Blindkontakt ausgebildet.

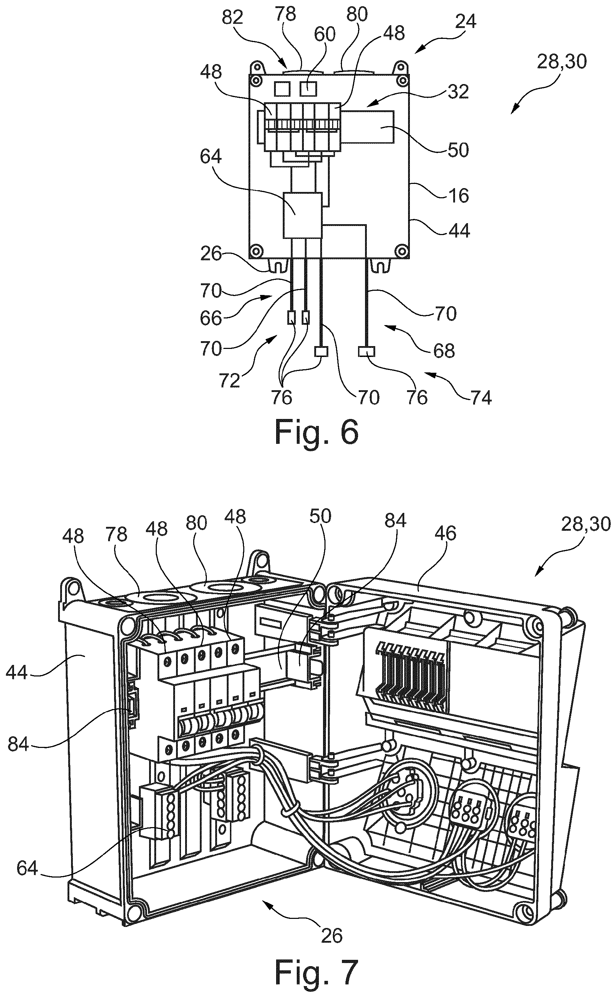

In Figur 5 ist in einer Draufsicht das Untermodul 28 dargestellt, das, mit Ausnahme der konkreten Ausgestaltung der weiteren Funktionskomponente 32, baugleich zu dem weiteren Untermoduls 30 ist. Auch hier weist der Schaltkasten 16 die Schale 44 auf, die mittels des Deckels 46 verschlossen ist, der schwenkbar an der der Schale 44 gelagert ist. In Figur 6 ist das Untermodul 28 bzw. das weitere Untermodul 30 schematisch mit abgenommenem Deckel 46 in einer Draufsicht gezeigt, und in Figur 7 perspektivisch mit weggeklapptem Deckel 46.

Die weitere Funktionskomponente 32 weist ebenfalls mehrere anreihbare Geräte 48 auf, die auf der jeweils zugeordneten Hutschiene 50 angeordnet sind. Die anreihbaren Geräte 48 sind auch hier durch entsprechende Öffnungen des Deckels 46 geführt, sodass eine Bedienung auch bei geschlossenem Deckel 46 möglich ist. Die anreihbaren Geräte 48 sind mit einer Verschalteinheit 64 elektrisch kontaktiert, die ebenfalls im Inneren des Schaltkastens 16 angeordnet ist.

Mit der Verschalteinheit 64 ist eine erste Verkabelungsleitung 66 und eine zweite Verkabelungsleitung 68 elektrisch kontaktiert und an dieser verliersicher befestigt, nämlich verlötet und verklebt. Die Verkabelungsleitungen 66, 68 sind mit den gleichen Anschlüssen der Verschalteinheit 64 elektrisch kontaktiert, sodass diese stets das gleiche elektrische Potential führen. Die beiden Verkabelungsleitungen 66, 68 sind aus dem Schaltkasten 16 herausgeführt und weisen jeweils zwei Kabel 70 auf. Die erste Verkabelungsleitung 66 weist an dem außerhalb des Schaltkasten 16 angeordneten Ende einen ersten Kontakt 72 und die zweite Verkabelungsleitung 68 dort einen zweiten Kontakt 74 auf, wobei jedem der Kabel 70 jeweils ein Kontaktteilt 76 des jeweiligen Kontakts 72, 72 zugeordnet ist.

Zusammenfassend weisen somit die beiden Untermodule 28, 30 die erste Verkabelungsleitung 66 mit dem ersten Kontakt 72 und die zweite Verkabelungsleitung 68 mit dem zweiten Kontakt 74 auf, die jeweils aus dem Schaltkasten 16 des jeweiligen Untermoduls 28,30 geführt sind. Die beiden Verkabelungsleitungen 66, 68 sind hierbei, mit Ausnahme deren Länge, zueinander baugleich. Hierbei ist die Länge der zweiten Verkabelungsleitung 68 vergrößert. Die beiden Verkabelungsleitung 66, 68 treten an einer Stirnseite des Schaltkastens 16, nämlich dem in vertikaler Richtung unteren Ende, aus dem Schaltkasten 16 aus, an der sich auch die zweite mechanische Schnittstelle 26 befindet. Die erste mechanische Schnittstelle 24 befindet sich an der gegenüberliegenden Seite und weist eine erste Öffnung 78 und ein zweite Öffnung 80 auf. Somit weist auch der Schaltkasten 16 des Hauptmoduls 12 die erste und zweite Öffnung 78, 80 auf.

Wenn das Untermodul 28 mittels der beiden mechanischen Schnittstellen 24, 26 an dem Hauptmodul 12 befestigt ist, ist die erste Verkabelungsleitung 66 durch die erste Öffnung 78 des Schaltkastens 16 des Hauptmoduls 12 geführt und mit dem ersten Gegenkontakt 56 verbunden. Die zweite Verkabelungsleitung 68 ist aus dem Schaltkasten 16 des Untermoduls 28 durch die zweite Öffnung 80 in den Schaltkasten 16 des Hauptmoduls 12 geführt und dort mit dem zweiten Gegenkontakt 58 verbunden, der als Blindkontakt ausgebildet ist. Die Kontakteile 76 der Kontakte 72, 74 korrespondieren hierbei zu den Kontaktteilen 60 der Gegenkontakte 56, 58, 62, sodass diese miteinander verbunden werden können, wobei eine elektrische Kontaktierung erfolgt. Die Länge der Kabel 70 der beiden Verkabelungsleitung 66, 68 sind vorkonfektioniert und derart angepasst, dass lediglich die jeweils zugeordneten Gegenkontakte 56, 58 erreicht werden können, ohne dass Schlaufen gebildet sind, und wobei lediglich geringes Spiel besteht. Somit ist das Zuordnen der Verkabelungsleitungen 66, 68 zu den entsprechenden Gegenkontakten 56,58 im Wesentlichen vertauschungssicher möglich. **In** einer Weiterbildung sind zudem die korrespondierenden Kontakte 72, 74 / Gegenkontakte 56, 58, 62 mit einer Bezeichnung bedruckt, was die Montage weiter erleichtert.

Die erste Verkabelungsleitung 66 des weiteren Untermoduls 30 ist, wenn das weitere Untermodul 30 mittels der beiden mechanischen Schnittstellen 24, 26 an dem Untermodul 28 befestigt ist, durch die erste Öffnung 78 in den Schaltkasten 16 des Untermoduls 28 geführt und mit einem sich dort befindenden weiteren Blindkontakt 82 verbunden, der baugleich zu dem zweiten Gegenkontakt 58 des Hauptmoduls 12 ist und somit auch die beiden Kontaktteile 60 aufweist.

Die zweite Verkabelungsleitung 68 des weiteren Untermoduls 30 ist durch die zweite Öffnung 80 des Untermoduls 28 in den Schaltkasten 16 des Untermoduls 28 hinein und durch eine nicht näher dargestellte weitere Öffnung des Untermoduls 28, die mittels der zweiten mechanischen Schnittstelle 26 gebildet ist, heraus und durch die zweite Öffnung 80 des Hauptmoduls 12 geführt. Dort ist der zweite Kontakt 74 die zweite Verkabelungsleitung 68 mit dem weiteren Gegenkontakt 62 verbunden.

Auch hier ist die Länge der Verkabelungsleitung 66, 68 des weiteren Untermoduls 30, die gleich der Länge der entsprechenden Verkabelungsleitungen 66, 68 des Untermoduls 28 sind, und die Position des zweiten Gegenkontakts 58 und des weiteren weiterer Blindkontakts 82 ist jeweils derart gewählt, dass ohne Spiel und ohne Schlaufenbildung der weitere Blindkontakt 82 und der weitere Gegenkotakt 62 erreicht werden können, sodass eine zweifelsfreie Zuordnung des weiteren Gegenkontakt 62 sowie des weiteren Blindkontakts 82 zu der jeweiligen Verkabelungsleitung 66, 68 ermöglicht ist. In einer Weiterbildung sind auch hier die korrespondierenden Kontakte 72, 74 / Gegenkontakte 56, 58, 62 mit einer Bezeichnung bedruckt, was die Montage weiter erleichtert.

Dabei ist es auch möglich, die Position des Untermoduls 28 und des weiteren Untermoduls 30 zu vertauschen, ohne dass hierfür eine besondere Anpassung erfolgen müsste. Aufgrund der verliersicheren Befestigung und Vorkonfektionierung der Verkabelungsleitung 66, 68 sowie der bereits bestehenden Verschaltung der weiteren Funktionskomponente 32 und der Funktionskomponente 18 ist zur Montage somit lediglich die mechanische Verbindung der Schaltkästen sowie das Verbinden der Verkabelungsleitungen 66, 68 erforderlich.

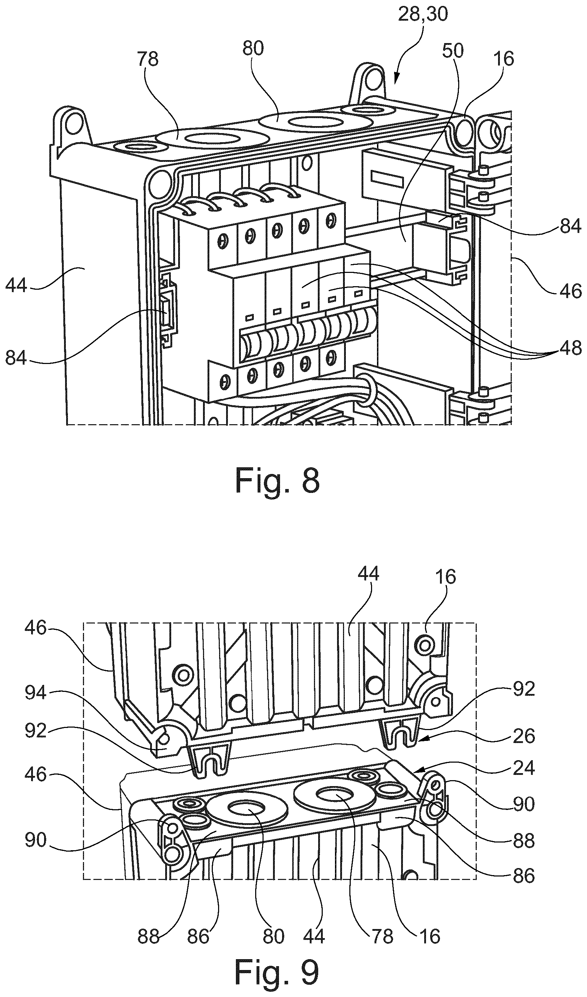

Zum vereinfachten Durchziehen der zweiten Anschlussleitung 68 durch den Schaltkasten 16 des Untermoduls 28, ist die Hutschiene 50 und somit auch die daran angebundenen anreihbaren Geräte 48, mittels einer entsprechenden Führung 84 verstellbar gelagert, sodass diese in einer horizontalen Ebene verstellt werden kann, wie in Figur 8 perspektivisch ausschnittsweise gezeigt. Somit ist es möglich, die anreihbaren Geräte 48 zumindest teilweise aus der Schale 44 heraus zu bewegen, weswegen die zweite Verkabelungsleitung 68 hinter der Hutschiene 50 und dem Boden der Schale 44 des Schaltkastens 16 hindurch gezogen werden kann. Dabei ist ein Ausbau oder eine Veränderung der bereits bestehenden Verkabelung nicht erforderlich. Somit ist auch ein Nachrüsten des weiteren Untermoduls 30 vergleichsweise einfach ermöglicht.

Mittels der ersten Verkabelungsleitung 66 ist das Untermodul 28 mit der elektrischen Leitung 10 elektrisch kontaktiert, und das weitere Untermodul 30 ist mittels der zweiten Verkabelungsleitung 68 mit elektrischen Leitung 10. **In** einer nicht näher dargestellten Variante werden mittels eines der Kabel 80 der jeweiligen Verkabelungsleitung 66, 68 teilweise Daten übertragen, und in den Schaltkästen 16 sind jeweils entsprechende Kommunikationsmodule angeordnet.

Zusammenfassend wird das Schaltkastensystem 14, das das Hauptmodul 12 und die beiden Untermodule 28, 30 mit dem jeweiligen Schaltkasten 16 aufweist, in dem die jeweilige Funktionskomponente 18,32 angeordnet ist, und die mittels der jeweiligen mechanischen Schnittstellen 24, 26 aneinander angebunden sind, zur Verkabelung der Wärmepumpe 20, des Batteriespeichersystems 28 und der Wallbox 34 verwendet.

**In** den Figuren 9-11 ist in einer Rückansicht der Schaltkästen 16 deren Aneinander mittels der ersten und zweiten mechanischen Schnittstelle 24, 26 bei Montage dargestellt. Zunächst wird der in vertikaler Richtung untere der beiden Schaltkastens 16 derart positioniert, dass sich die erste Schnittstelle 24 in einer horizontalen Ebene befindet und das obere Ende des entsprechenden Schaltkastens 16 bildet. Somit befindet sich die erste mechanische Schnittstelle 24 an einer Stirnseite des Schaltkastens 16, und die erste und zweite Öffnung 78, 80 weisen in vertikaler Richtung nach oben. Sofern dieses beispielsweise verschlossen sind, werden diese mittels heraus Brechens einer entsprechenden Abdeckung geöffnet. Alternativ hierzu sind erste und zweite Öffnung 78, 80 mittels einer Gummimembran überspannt durch die jedoch ein Einstecken der jeweiligen Verkabelungsleitung 66, 68 möglich ist.

Die erste mechanische Schnittstelle 24 umfasst zwei Aufnahmen 86, die jeweils mittels einer Abdeckung 88 abgedeckt sind. Dieses sind an den Rand der Stirnseiten auf die jeweils zugeordnete Längsseite hin versetzt, jedoch von dieser mittels einer Hilfslasche 90 beabstandet, die vertikal nach oben reicht. Die Aufnahmen 86 befinden sich dabei an dem Boden der jeweiligen Schale 44, die im Montagezustand an der Wand des Gebäudes 2 anliegt, an der das Schaltkastensystem 14 befestigt ist.

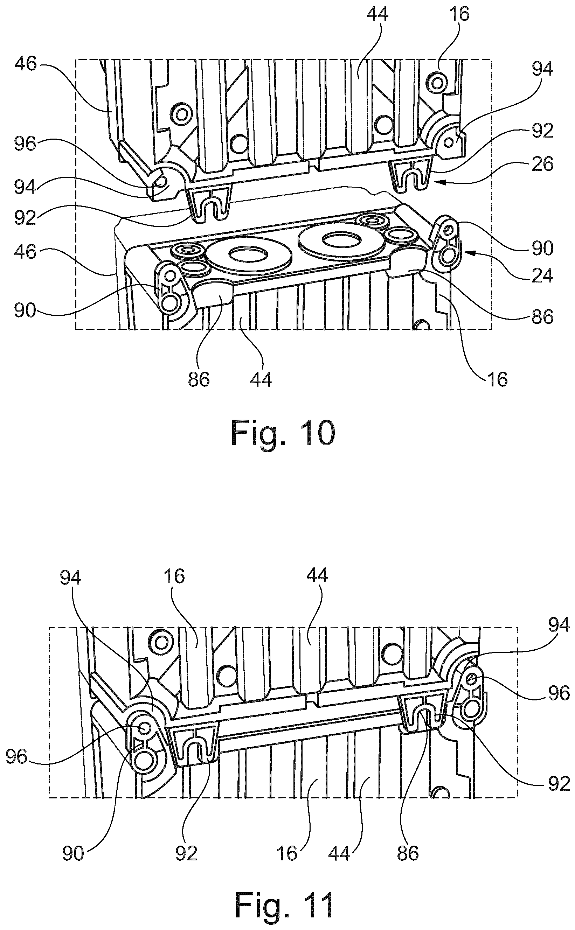

Die Abdeckungen 88 werden herausgebrochen, wie in Figur 10 dargestellt. Somit dann die Aufnahmen 86 frei. **In** einer Alternative sind die Abdeckungen 88 überhaupt nicht vorhanden, weswegen die Aufnahmen 86 stets freizugänglich sind, unabhängig davon, ob an die erste mechanische Schnittstelle 24 ein anderer Schaltkasten 16 angeschlossen wird.

Wenn die Aufnahmen 86 frei sind, wird in jede eine Lasche 92 des zu montierenden Schaltkastens 16 eingeführt, die klauenartig ausgebildet und ein Bestandteil der zweiten mechanischen Schnittstelle sind. Hierfür wird der zu montierende Schaltkastens 16 in vertikaler Richtung oberhalb der ersten Schnittstelle 24 positioniert und dann abgesenkt. Jede Lasche 92 wird in der jeweils zugeordneten Aufnahme 86 mittels nicht näher dargestellter Elementen verrastet.

Während der Bewegung der Laschen 92 in die Aufnahmen 68 taucht auch jede Hilfslasche 90 in eine zugeordnete Aussparung 94 der zweiten mechanische Schnittstelle 26 ein, die mittels der Schale 44 des entsprechenden Schaltkastens 16 bereitgestellt ist. Die Hilfslaschen 90 weisen jeweils ein Montageloch 96 auf, das dann deckungsgleich mit einem zugeordneten Montageloch 96 der Aussparung 94 ist. Durch diese beiden wird dann von der dem Deckel 46 zugewandten Seite der Schale 44, die die zweite mechanische Schnittstelle 26 aufweist, jeweils eine Montageschraube eingeführt und in die Wand eingedreht. Somit sind die beiden Schaltkasten 16 aneinander befestigt.

Zusammenfassend weist somit der Schaltkasten 16 des Hauptmoduls 12 die erste mechanische Schnittstelle 24 auf, an die die zweite mechanische Schnittstelle 26 des Schaltkastens 16 des Untermoduls 28 angeschlossen ist. Auch weist der Schaltkasten 16 des Untermodul 28 die erste mechanische Schnittstelle 24 auf, an die die zweite mechanische Schnittstelle 26 des Schaltkastens 16 des weiteren Untermoduls 30 angeschlossen ist. Hierbei befinden sich die Schnittstelle 24, 26 unterschiedlicher Schaltkästen 16 an zueinander parallelen und einander zugewandten Stirnseiten der jeweiligen Schaltkästen 16. Auch sind die Schnittstellen 24, 26 derart ausgebildet, dass im Montagezustand sämtliche Längsseiten der Schaltkästen 16 zueinander bündig sind.

Die Erfindung ist nicht auf das vorstehend beschriebene Ausführungsbeispiel beschränkt. Vielmehr können auch andere Varianten der Erfindung von dem Fachmann/Fachleuten hieraus abgeleitet werden, ohne den Gegenstand der Erfindung zu verlassen. Insbesondere sind ferner alle im Zusammenhang mit dem Ausführungsbeispiel beschriebene Einzelmerkmale auch auf andere Weise miteinander kombinierbar, ohne den Gegenstand der Erfindung zu verlassen.

### Bezugszeichenliste

- 2: Gebäude
- 4: Gebäudeinstallation
- 6: Verteilerschaltschrank
- 8: Versorgungsnetz
- 10: elektrische Leitung
- 12: Hauptmodul
- 14: Schaltkastensystem
- 16: Schaltkasten
- 18: Funktionskomponente
- 20: Wärmepumpe
- 22: Anschlussleitung
- 24: erste mechanische Schnittstelle
- 26: zweite mechanische Schnittstelle
- 28: Untermodul
- 30: weitere Untermodul
- 32: weitere Funktionskomponente
- 34: Wallbox
- 36: Umrichter
- 38: Batteriespeichersystem
- 40: Photovoltaikmodul
- 42: elektrischer Speicher
- 44: Schale
- 46: Deckel
- 48: anreihbares Gerät
- 50: Hutschiene
- 52: Stromschiene
- 54: Steckdose
- 56: erster Gegenkontakt
- 58: zweiter Gegenkontakt
- 60: Kontaktteil
- 62: weiterer Gegenkontakt
- 64: Verschalteinheit
- 66: erste Verkabelungsleitung
- 68: zweite Verkabelungsleitung
- 70: Kabel
- 72: erster Kontakt
- 74: zweiter Kontakt
- 76: Kontaktteil
- 78: erste Öffnung
- 80: zweite Öffnung
- 82: weiterer Blindkontakt
- 84: Schiene
- 86: Aufnahme
- 88: Abdeckung
- 90: Hilfslasche
- 92: Lasche
- 94: Aussparung
- 96: Montageloch

## Patentansprüche

1. Schaltkastensystem (14) mit einem Hauptmodul (12), das einen Schaltkasten (16) umfasst, in dem eine Funktionskomponente (18) für eine Wärmepumpe (20) oder eine Batteriespeichersystem (38) angeordnet ist, wobei der Schaltkasten (16) eine erste mechanische Schnittstelle (24) zum Anschluss einer zweiten mechanische Schnittstelle (26) eines Schaltkastens (16) eines Untermoduls (28) aufweist, in welchem eine weitere Funktionskomponente (32) angeordnet ist.

2. Schaltkastensystem (14) nach Anspruch 1,
**dadurch gekennzeichnet,**
**dass** das Untermodul (28) mittels der zweiten mechanischen Schnittstelle (26) an der ersten mechanischen Schnittstelle (24) angeschlossen ist.

3. Schaltkastensystem (14) nach Anspruch 2,
**dadurch gekennzeichnet,**
**dass** sich die Schnittstellen (24, 26) an einander zugewandten und parallel zueinander verlaufender Stirnseiten des jeweiligen Schaltkastens (16) befinden, wobei die Längsseiten zueinander bündig sind.

4. Schaltkastensystem (14) nach Anspruch 2 oder 3,
**dadurch gekennzeichnet,**
**dass** der Schaltkasten (16) des Untermoduls (28) eine erste mechanische Schnittstelle (24) zum Anschluss der zweiten mechanische Schnittstelle (26) eines Schaltkastens (16) eines weiteren Untermoduls (30) aufweist.

5. Schaltkastensystem (14) nach einem der Ansprüche 2 bis 4,
**dadurch gekennzeichnet,**
**dass** das Untermodul (28) eine erste Verkabelungsleitung (66) mit einem ersten Kontakt (72) aufweist, der aus dem Schaltkasten (16) des Untermoduls (28) in den Schaltkasten (12) des Hauptmoduls (12) geführt und mit einem entsprechenden ersten Gegenkontakt (56) verbunden ist.

6. Schaltkastensystem (14) nach Anspruch 5,
**dadurch gekennzeichnet,**
**dass** die erste Verkabelungsleitung (66) verliersicher an weiteren Bestandteilen des Untermoduls (28) befestigt ist.

7. Schaltkastensystem (14) nach Anspruch 5 oder 6,
**dadurch gekennzeichnet,**
**dass** das Untermodul (28) eine zweite Verkabelungsleitung (68) mit einem zweiten Kontakt (74) aufweist, der aus dem Schaltkasten (16) des Untermoduls (28) in den Schaltkasten (16) des Hauptmoduls (12) geführt und mit einem entsprechenden zweiten Gegenkontakt (58) verbunden ist, wobei die beiden Verkabelungsleitungen (66, 68) unterschiedliche Längen aufweisen, und wobei einer der Gegenkontakte (56, 58) als Blindkontakt ausgebildet ist.

8. Schaltkastensystem (14) nach einem der vorhergehenden Ansprüche,
**dadurch gekennzeichnet,**
**dass** der Schaltkasten (16) des Untermoduls (28) eine erste Öffnung (78) zum Einführen der ersten Verkabelungsleitung (66) des weiteren Untermoduls (30) aufweist.

9. Schaltkastensystem (14) nach einem der vorhergehenden Ansprüche,
**dadurch gekennzeichnet,**
**dass** der Schaltkasten (16) des Untermoduls (28) eine zweite Öffnung (80) zum Einführen der zweiten Verkabelungsleitung (68) des weiteren Untermoduls (60) aufweist, wobei eine der Verkabelungsleitungen (66) durch eine dem Hauptmodul (12) zugewandte weitere Öffnung des Untermoduls (28), in den Schaltkasten (16) des Hauptmoduls (12) geführt und mit einem entsprechenden weiteren Gegenkontakt (58) des Hauptmoduls (12) verbunden ist, und wobei die andere Verkabelungsleitung (68) mit einem weiteren Blindkontakt (82) des Untermoduls (28) verbunden ist.

10. Verwendung eines Schaltkastensystems (14), das ein Hauptmodul (12) und ein Untermodul (28, 30) mit jeweils einem Schaltkasten (16) aufweist, in dem jeweils eine Funktionskomponente (18, 32) angeordnet ist, und die mittels einer jeweiligen mechanischen Schnittstelle (24, 26) aneinander angebunden sind, zur Verkabelung einer Wärmepumpe (20), eine Batteriespeichersystem (28) und / oder einer Wallbox (34).
